# EUROPÄISCHE PATENTSCHRIFT

(11) **EP 2 737 491 B1**
(45) Veröffentlichungstag und Bekanntmachung des Hinweises auf die Patenterteilung: **10.08.2016**
(21) Anmeldenummer: 12734824.1
(22) Anmeldetag: 12.06.2012
(51) Int. Cl.: G21C 7/12, G21C 13/028, G21C 7/14

(54) **VERBINDUNG ZWISCHEN STEUERSTABFÜHRUNGSROHR UND ANTRIEBSGEHÄUSEROHR EINES KERNREAKTORS**
CONNECTION BETWEEN A CONTROL ROD GUIDE TUBE AND DRIVE HOUSING PIPE OF A NUCLEAR REACTOR
LIAISON ENTRE UN TUBE DE GUIDAGE DE BARRE DE CONTRÔLE ET LE TUBE DE CARTER D'ENTRAÎNEMENT D'UN RÉACTEUR NUCLÉAIRE

(30) Priorität: 29.07.2011 DE 102011108802
(43) Veröffentlichungstag der Anmeldung: 04.06.2014
(73) Patentinhaber: AREVA GmbH, 91052 Erlangen (DE)
(72) Erfinder: LEMM, Andreas, 90427 Nürnberg (DE); IRAK, Elayza, 91088 Bubenreuth (DE); WINTERMANN, Benediktus, 91054 Buckenhof (DE); LEIBOLD, Friedrich, 91230 Happurg (DE)
(74) Vertreter: Kugler, Jörg
(86) Internationale Anmeldenummer: PCT/EP2012/061069
(87) Internationale Veröffentlichungsnummer: WO 2013/017323

(56) Entgegenhaltungen:
- US-A- 3 345 711

## Beschreibung

Die Erfindung betrifft ein Steuerstabführungsrohr (SSFR) mit einem koaxial damit durch einen Bajonettscheibenverschluss verbundenen Antriebsgehäuserohr (AGR) eines Siedewasserreaktors.

Eine Grundforderung ist die gezielt feste Verspannung der Aufsattelung des SSFR am AGR, um ein Abheben des SSFR und als Folge davon einen undefinierbaren Bypass an der Verbindungsstelle zu verhindern. Andererseits sind jedoch hohe Anforderungen an die Montierbarkeit des SSFR am AGR zu gewährleisten. In Siedewasserreaktoren sind nämlich die zur Steuerung der Leistung erforderlichen Steuerstäbe unterhalb des Reaktorkerns in Steuerstabführungsrohren (SSFR) geführt. Diese in großer Tiefe befindlichen SSFR müssen problemlos ausgebaut werden können, um für Servicezwecke an Bereiche des unteren Plenums des Reaktorbehälters zu gelangen. Dazu muss das mit seiner Fußplatte am jeweiligen AGR verriegelte SSFR entriegelt und vom AGR abgezogen werden. Bei den angestrebt langen Betriebszeiten der Anlage kommt es infolge von Ablagerungen in den Passungen der Fügestellen aber zu Schwergängigkeiten, die den Ausbau erschweren und sehr zeitaufwändig gestalten. Der Ausbau wird auch dadurch erschwert, dass sich die Fußplatten in großer Tiefe (etwa 30 m) unterhalb des Wasserspiegels des gefluteten Reaktorbeckens befinden.

Um an diese Fußplatten zu gelangen, ist es im Stand der Technik z.B. bekannt, bis zu sieben jeweils 4 m lange Werkzeugstangen in Axialrichtung aneinander zu kuppeln, um am unteren Ende dieses Gestänges das eigentliche Ver- und Entriegelungswerkzeug anzubringen, das dazu in eine drehbar auf der Fußplatte gelagerte Bajonettringscheibe eingreift. Diese Probleme sind z.B. in DE 201 00 351 U1 (Beschreibungseinleitung) anschaulich erläutert.

Des weiteren wird von US 3 345 711 A ein Verbindungsmechanismus zweier Rohre mittels eines bajonettartigen Verschlusses offenbart.

Der Erfindung liegt die Aufgabe zugrunde, die betriebsbewährte Bajonettverriegelung zwar beizubehalten, indessen ihre betriebstechnisch immer wieder erforderliche Montierbarkeit zu verbessern.

Diese Aufgabe wird erfindungsgemäß durch die Merkmale von Anspruch 1 gelöst.

Demnach ist eine mindestens zweiteilige Ausführung der Bajonettscheibe vorgesehen. Sie besteht aus einem drehbar um dessen Längsachse gelagerten zentralen Bajonettring in herkömmlicher Konstruktions- und Funktionsweise als Träger von Bajonettnuten, mit zusätzlich einem auf dem Umfang des Bajonettringes gelagerten Außenring. Die Anordnung ist derart, dass der Außenring den Umfang des Bajonettrings nach innen untergreift und unter in Achsrichtung permanent auf das SSFR wirksamem Federdruck an einem Bodenflansch des SSFR - und damit mittelbar am AGR - abgestützt ist. Der vorgespannte Außenring und der Bajonettring bilden dabei gewissermaßen eine lösbare Kupplung.

Zur Entriegelung des SSFR wird der im Betrieb permanent seitens des AGR auf den Außenring einwirkende Federdruck dadurch aufgehoben, dass der Außenring mit einem Werkzeug hinuntergedrückt wird. Durch Drehung lässt sich der Bajonettring sodann spannungsfrei einerseits entriegeln und andererseits wieder verriegeln. In verriegeltem Zustand drückt der Bajonettring mittelbar über den Außenring mit definierter Kraft das SSFR gegen die Auflageflächen des AGR und verspannt das SSFR drehschlüssig mit dem AGR. Ein "Aufschwimmen" des beim Betrieb vom Reaktorkühlmittel umspülten SSFR wird somit bei allen transienten Betriebsvorgängen sicher verhindert. Das zur Erzeugung des Federdrucks vorgesehene, vorzugsweise als Tellerfeder ausgestaltete Federelement umgibt das Antriebsgehäuserohr mit radialem Gleitsitz.

Zur Sicherstellung einer Abdichtung an der Auflage sind die gegenseitigen Anlageflächen des SSFR am AGR vorteilhafterweise eben (flach), kegelmantelartig oder ballig ausgestaltet. Die beiden zuletzt genannten Varianten haben den zusätzlichen Vorteil, die Aufnahme von in Radialrichtung wirkenden Seitenkräften zu gewährleisten und damit ungewollte horizontale (laterale) Bewegungen des SSFR gegenüber dem AGR zu verhindern.

Der Bajonettring ist mit axialem Spiel auf dem Antriebsgehäuserohr drehgelagert. Dieses Spiel wird im normalen Betrieb durch den auf das SSFR permanent wirksamen Federdruck kompensiert und nur zu Montage- oder Demontagezwecken durch Niederdrücken des Außenringes mit einem dafür geeigneten Werkzeug zugelassen.

Weitere vorteilhafte Ausgestaltungen der Erfindung gehen aus den Unteransprüchen und der detaillierten Figurenbeschreibung hervor.

Die mit der Erfindung erzielten Vorteile bestehen einerseits darin, dass durch die Integration einer Niederhaltefeder in die Verriegelung das SSFR zuverlässig mit dem AGR verspannt werden kann, so dass eine sichere und schwingungs- und bewegungsfreie Einbaulage des SSFR bei allen Betriebszuständen gewährleistet ist. Andererseits wird durch die zweigeteilte Bajonettscheibe eine einfache Montagemöglichkeit geschaffen, da beim Entriegeln und Verspannen der Außenring mit einem zugehörigen Werkzeug niedergedrückt und dann der innenliegende Bajonettring leicht verdreht werden kann.

Die Erfindung wird nachfolgend anhand der Figuren beispielhaft beschrieben. Es zeigen in jeweils vereinfachter und schematisierter Darstellung:

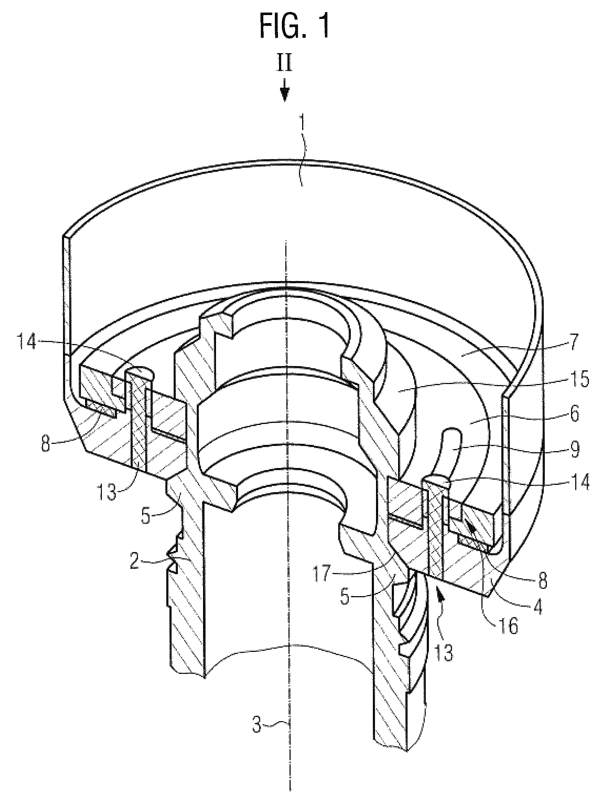

- Fig. 1: einen perspektivischen, in Axialrichtung des Steuerstabführungsrohres (SSFR) und des Antriebsgehäuserohres (AGR) verlaufenden Längsschnitt des Gesamtaggregats in montiertem Zustand,
- Fig. 2: eine Draufsicht in Pfeilrichtung II von Fig. 1 auf das SSFR einwärts in Richtung auf die Mittellängsachse des AGR, von außen nach innen gerichtet aufeinanderfolgend mit dem Außenring, dem von ihm umgebenen Bajonettring und zentral dem vom Bajonettring umgebenen Antriebsgehäuserohr, und
- Fig. 3: eine vergrößerte Ausschnittsdarstellung der Auflage des Bajonettrings auf einer inneren Ringstufe des Außenrings.

Das SSFR 1 umgibt einen Steuerstab des hier nicht näher dargestellten Reaktors. Der Steuerstab ist mit einer in das AGR 2 vertikal hineintauchenden Antriebsstange verbunden. Der mit der Vertikalachse von SSFR 1 und AGR 2 konzentrische, von oben nach unten in das SSFR 1 eintauchende Steuerstab und die Antriebstange sind selbst nicht dargestellt, sondern nur symbolisch durch die Längsachse 3 markiert.

Das SSFR 1 ist an seinem vom Reaktorkern abgewandten Bodenende mit einem sich einwärts in Richtung auf die Längsachse 3 des AGR 2 erstreckenden Bodenflansch 4 auf den Ringvorsprung 5 des AGR 2 aufgesattelt.

Innerhalb des SSFR 1 sind oberhalb seines sich radial in Richtung auf die Längsachse 3 erstreckenden Bodenflansches 4 konzentrisch zum AGR 2 der herkömmliche Bajonettring 6 und der ihn erfindungsgemäß mit radialem Spielsitz umgebende Außenring 7 positioniert, der den Außenumfang des Bajonettrings 6 mit seinem Innenumfang untergreift. Der Außenring 7 ist somit umfänglich auf dem Bodenflansch 4 des SSFR 1 abgestützt unter Zwischenlage einer zur Längsachse 3 konzentrisch positionierten Tellerfeder 8. Die Tellerfeder 8 umgibt das AGR 2 mit radialem Gleitsitz. Ihr Einsatz eignet sich vorliegend wegen ihres geringen Platzbedarfs und großen Kräften bei kleinen Federwegen, weshalb sie auch notorisch bevorzugt als Spannelement in Vorrichtungen und Werkzeugen verwendet wird. Gebräuchliche Tellerfedern sind kegelschalenförmig gestaltete, in Achsrichtung belastbare Ringscheiben. Vorliegend umgibt die Tellerfeder 8 das AGR 2 mit radialem Gleitsitz.

Die Funktionsweise des vorliegenden Bajonettverschlusses ist grundsätzlich aus den herkömmlich bekannten Konstruktionen geläufig. Der Bajonettring 6 besitzt auch vorliegend über seinen Umfang gleichmäßig verteilt vier Ring- bzw. Längsschlitze 9, die den Bajonettring 6 parallel zur Längsachse 3 von seiner Oberseite 10 bis zu seiner Unterseite 11 durchsetzen. Ihr Umfangsverlauf liegt auf einem um die Längsachse 3 als Mittelpunkt geschlagenen Kreisbogen. Die Längsschlitze 9 enden - in Umfangsrichtung gleichsinnig - an einem Ende in jeweils einem auch als Arretierungsbohrung bezeichneten Einführungsloch 12 für den ihnen jeweils zugeordneten Haltestift bzw. Befestigungsstift 13. Die - beim Ausführungsbeispiel vier - Befestigungsstifte 13 verlaufen mit ihren Schäften parallel zur Längsachse 3 des Steuerstabführungsrohres 2. Sie sind mit ihren freien, im Montagezustand unteren Enden im Bodenflansch 4 fixiert, z.B. eingeschraubt. An ihren in Einbaustellung in Richtung auf das SSFR 1 nach oben weisenden, die Längsschlitze 9 durchsetzenden Enden sind sie mit radial erweiterten Arretierungsköpfen bzw. Verriegelungsköpfen 14 versehen, die in Spann- bzw. Verriegelungsstellung außerhalb der Einführungslöcher 12 der Längsschlitze 9 die freie Oberfläche des Bajonettringes 6 beaufschlagen und in entsprechender Drehstellung des AGR 2 den Bajonettring 6 von oben beaufschlagen und formschlüssig am AGR 2 verspannen, solange der Axialdruck der Tellerfeder 8 den Außenring 7 in Axialrichtung gegen den Bajonettring 6 presst und dadurch die Drehstellung des Bajonettrings 6 fixiert (Verdrehsicherung).

In der Verriegelungsstellung ist der Bajonettring 6 durch - im Ausführungsbeispiel vier gleichmäßig über den Umfang verteilte - am Kopf des AGR 2 angeformte, radial nach außen abstehende und den Bajonettring 6 von innen übergreifende nockenartige Haltevorsprünge 15 gegen Verschiebung in Axialrichtung nach oben gesichert. Die Haltevorsprünge 15 bilden also obere Anschläge für den mit Axialspiel gelagerten Bajonettring 6. Indem die Tellerfeder 8 bestrebt ist, den Axialabstand zwischen dem Außenring 7 der Bajonettscheibe und dem ringförmigen Bodenflansch 4 des SSFR 1 aufzuspreizen, wird einerseits über die Ringstufe 16 der Bajonettring 6 nach oben gegen die Haltevorsprünge 15 gedrückt. Andererseits wird der Bodenflansch 4 des SSFR 1 nach unten gegen die nach Art eines unteren Anschlags wirksame Auflagefläche 17 des Ringvorsprungs 5 am AGR 2 gedrückt und damit insgesamt das SSFR 1 am AGR 2 fixiert. Durch geeignete Formgebung der Auflagefläche 17 des Ringvorsprungs 5 (z.B. kegelig, rund, ballig) und der dazu komplementär geformten Anlagefläche des Bodenflansches 4 kann eine gewünschte Abdichtung in diesem Bereich realisiert sein.

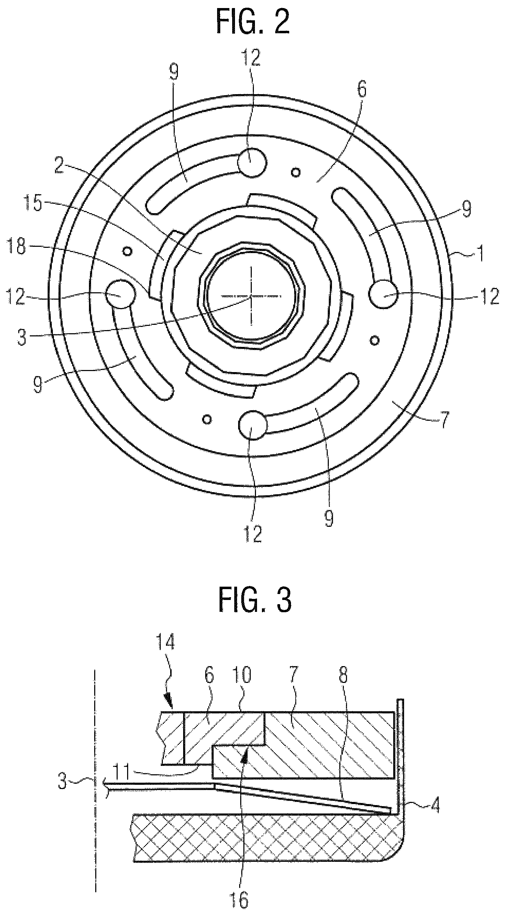

Die Fixierwirkung kann von oben durch das SSFR 1 mittels Druckbeaufschlagung des Außenringes 7 durch ein geeignetes Werkzeug aufgehoben werden. Dadurch wird die Tellerfeder 8 zusammengedrückt und gespannt, und die von ihr generierte Sperrwirkung des Bajonettverschlusses ist somit aufgehoben. Die Entriegelung des Bajonettverschlusses lässt sich nunmehr problemlos bewerkstelligen. Wie am besten aus FIG. 2 hervorgeht, befinden sich an der Innenseite des Bajonettrings 6 zu den Haltevorsprüngen 15 am Kopf des AGR 2 komplementäre Rücksprünge 18, die im Entriegelungszustand mit den Haltevorsprüngen 15 in Deckung sind, so dass der Bajonettring 6 nach der Entfernung der Verriegelungsknöpfe 13 bei Bedarf nach oben vom AGR 2 abgehoben werden kann. Da der Bodenflansch 4 des SSFR 1 ebenfalls entsprechende Rücksprünge (hier nicht sichtbar) besitzt, kann im entriegelten Zustand bei geeigneter Drehstellung das SSFR 1 komplett vom AGR 2 abgehoben werden.

### Bezugszeichenliste

- 1: Steuerstabführungsrohr (SSFR)
- 2: Antriebsgehäuserohr (AGR)
- 3: Längsachse
- 4: Bodenflansch
- 5: Ringvorsprung
- 6: Bajonettring
- 7: Außenring
- 8: Tellerfeder
- 9: Längsschlitz
- 10: Oberseite
- 11: Unterseite
- 12: Einführungsloch
- 13: Befestigungsstift
- 14: Verriegelungskopf
- 15: Haltevorsprung
- 16: Ringstufe
- 17: Auflagefläche
- 18: Rücksprung

## Patentansprüche

1. Steuerstabführungsrohr (1) und koaxial damit durch einen Bajonettscheibenverschluss verbundenes Antriebsgehäuserohr (2) für einen Siedewasserreaktor, wobei der Bajonettscheibenverschluss eine zweiteilige Bajonettscheibe enthält, die Bajonettscheibe bestehend aus
a) einem drehbar um dessen Längsachse (3) gelagerten zentralen Bajonettring (6) als Träger von Bajonettnuten, mit zusätzlich
b) einem auf dem Umfang des Bajonettringes (6) gelagerten Außenring (7), welcher
i) den Bajonettringumfang nach innen untergreift, und
ii) unter in Achsrichtung permanent auf das Steuerstabführungsrohr (1) wirksamem Federdruck an einem sich einwärts in Richtung auf die Längsachse (3) erstreckenden Bodenflansch (4) des Steuerstabführungsrohres (1) abgestützt ist.

2. Steuerstabführungsrohr (1) und Antriebsgehäuserohr (2) nach Anspruch 1, wobei der Außenring (7) mit einer konzentrischen Ringstufe (16) gleitend am Umfang und an der Unterseite des Bajonettrings (6) anliegt.

3. Steuerstabführungsrohr (1) und Antriebsgehäuserohr (2) nach Anspruch 1 oder 2, mit einer den Axialabstand zwischen Bajonettring (6) und Bodenflansch (4) aufspreizenden die beaufschlagenden Tellerfeder (8).

4. Steuerstabführungsrohr (1) und Antriebsgehäuserohr (2) nach einem der Ansprüche 1 bis 3, mit am Kopf des Antriebsgehäuserohres (2) angeformten, radial nach außen abstehenden und im Verriegelungszustand des Bajonettscheibenverschlusses den Bajonettring (6) von innen übergreifenden Haltevorsprüngen (15).

5. Steuerstabführungsrohr (1) und Antriebsgehäuserohr (2) nach Anspruch 4, mit an der Innenseite des Bajonettrings (6) befindlichen, zu den Haltevorsprüngen (15) am Kopf des Antriebsgehäuserohres (2) komplementären Rücksprüngen (18), die im Entriegelungszustand mit den Haltevorsprüngen (15) in Deckung zu bringen sind.

6. Steuerstabführungsrohr (1) und Antriebsgehäuserohr (2) nach einem der Ansprüche 3 bis 5, wobei die Tellerfeder (8) das Antriebsgehäuserohr (2) mit radialem Gleitsitz umgibt.

7. Steuerstabführungsrohr (1) und Antriebsgehäuserohr (2) nach einem der Ansprüche 1 bis 6, mit einer ebenen, kegelmantelartigen oder balligen Oberflächenform der radial nach außen über den Rohrmantel hinausstehenden Auflagefläche (17) des Steuerstabführungsrohres (1) am Antriebsgehäuserohr (2).

8. Steuerstabführungsrohr (1) und Antriebsgehäuserohr (2) nach einem der Ansprüche 1 bis 7, wobei der Bajonettring (6) im entriegelten Zustand mit axialem Spiel auf dem Antriebsgehäuserohr (2) drehgelagert ist.

9. Steuerstabführungsrohr (1) und Antriebsgehäuserohr (2) nach einem der Ansprüche 1 bis 8, wobei der Bajonettring (6) im verriegelten Zustand durch den wirksamen Federdruck axial in seinem Sitz auf dem Antriebsgehäuserohr (2) verspannt ist.

10. Steuerstabführungsrohr (1) und Antriebsgehäuserohr (2) nach einem der Ansprüche 1 bis 9, mit einer Verdrehsicherung des Bajonettrings (6), die im verriegelten Zustand mit den Bajonettring (6) durchgreifenden und mit Verriegelungsköpfen (14) versehenen Befestigungsstiften (13) versehen ist.

## Claims

1. A control rod guide tube (1) and a drive housing pipe (2) coaxially connected therewith by means of a bayonet plate closure for a boiling-water reactor, wherein the bayonet plate closure contains a two-part bayonet plate consisting of
a) a central bayonet ring (6) mounted rotatably about the longitudinal axis (3) of the bayonet plate closure as a carrier of bayonet grooves, additionally having
b) an outer ring (7) mounted on the periphery of said bayonet ring (6), said outer ring (7)
i) reaching inward underneath said periphery of said bayonet ring (6), and
ii) being supported on a base flange (4), extending inwardly in the direction of the longitudinal axis (3), of said control rod guide tube (1), with spring pressure acting permanently on said control rod guide tube (1) in the direction of said axis.

2. The control rod guide tube (1) and drive housing pipe (2) of claim 1, wherein the outer ring (7) has a concentric annular step (16) bearing and sliding on the periphery and the underside of said bayonet ring (6).

3. The control rod guide tube (1) and drive housing pipe (2) of claim 1 or 2, having a disk spring (8) spreading apart the axial distance between said bayonet ring (6) and said base flange (4).

4. The control rod guide tube (1) and drive housing pipe (2) of any of claims 1 to 3, having radially outwardly protruding retaining protrusions (15) integrally formed at the head of the drive housing pipe (2) and reaching over said bayonet ring (6) from inside in a locked state of said bayonet plate closure.

5. The control rod guide tube (1) and drive housing pipe (2) of claim 4, having recesses (18) which are located on the inner side of said bayonet ring (6) and which are complementary to said retaining protrusions (15) at said head of said drive housing pipe (2) and which are configured to be put into coincidence with said retaining protrusions (15) in the unlocked state.

6. The control rod guide tube (1) and drive housing pipe (2) of any of claims 3 to 5, wherein the disk spring (8) surrounds said drive housing pipe (2) with a radial sliding fit.

7. The control rod guide tube (1) and drive housing pipe (2) of any of claims 1 to 6, having a planar, conical envelope-shaped or crowned surface shape of the contact surface (17), protruding radially outwardly beyond the tube shell, of the control rod guide tube (1) on the drive housing pipe (2).

8. The control rod guide tube (1) and drive housing pipe (2) of any of claims 1 to 7, wherein said bayonet ring (6) is mounted rotatably on said drive housing pipe (2) with axial play in the unlocked state.

9. The control rod guide tube (1) and drive housing pipe (2) of any of claims 1 to 8, wherein said bayonet ring (6) is axially braced, in the locked state, in its seat on the drive housing pipe (2) by the active spring pressure.

10. The control rod guide tube (1) and drive housing pipe (2) of any of claims 1 to 9, having an antirotation protection of said bayonet ring (6), which is provided, in the locked state, with fastening pins (13) which reach through said bayonet ring (6) and are provided with locking heads (14).

## Revendications

1. Tube de guidage de barre de contrôle (1) et tube de carter d'entraînement (2) relié de manière coaxiale au premier au moyen d'un fermoir à disque à baïonnette pour un réacteur à eau bouillante, dans lesquels le fermoir à disque à baïonnette contient un disque à baïonnette en deux parties se composant
a) d'un anneau à baïonnette central (6) monté de manière à pouvoir tourner autour de l'axe longitudinal (3) du tube de carter d'entraînement (2) en tant que porteur de rainures à baïonnette, ayant additionnellement
b) un anneau extérieur (7) monté sur la périphérie du dit anneau à baïonnette (6), l'anneau extérieur (7)
i) soutenant la dite périphérie du dit anneau à baïonnette (6) par en-dessous vers l'intérieur, et
ii) étant étayé sur une bride de fond (4), s'étendant vers l'intérieur en direction de l'axe longitudinal (3), du dit tube de guidage de barre de contrôle (1) par pression de ressort agissant en permanence sur le dit tube de guidage de barre de contrôle (1) en direction du dit axe.

2. Tube de guidage de barre de contrôle (1) et tube de carter d'entraînement (2) selon la revendication 1, dans lesquels l'anneau extérieur (7) a un épaulement (16) annulaire concentrique s'appuyant et glissant sur la périphérie et la face inférieure du dit anneau à baïonnette (6).

3. Tube de guidage de barre de contrôle (1) et tube de carter d'entraînement (2) selon la revendication 1 ou 2, ayant un ressort à disques (8) écartant la distance axiale entre le dit anneau à baïonnette (6) et la dite bride de fond (4).

4. Tube de guidage de barre de contrôle (1) et tube de carter d'entraînement (2) selon l'une quelconque des revendications 1 à 3, ayant des saillies de retenu (15) qui saillissent radialement vers l'extérieur, qui sont formées intégralement à la tête du tube de carter d'entraînement (2) et qui passent au-delà du dit anneau à baïonnette (6) de l'intérieur dans un état verrouillé du dit fermoir à disque à baïonnette.

5. Tube de guidage de barre de contrôle (1) et tube de carter d'entraînement (2) selon la revendication 4, ayant des retraits (18) qui se trouvent au côté intérieur du dit anneau à baïonnette (6), qui sont complémentaires aux dits saillies de retenu (15) à la tête du tube de carter d'entraînement (2) et qui sont configurées à être mises en coïncidence avec les saillies de retenu (15) à l'état non verrouillé.

6. Tube de guidage de barre de contrôle (1) et tube de carter d'entraînement (2) selon l'une quelconque des revendications 3 à 5, dans lesquels le ressort à disques (8) entoure le tube de carter d'entraînement (2) avec un ajustement glissant radial.

7. Tube de guidage de barre de contrôle (1) et tube de carter d'entraînement (2) selon l'une quelconque des revendications 1 à 6, ayant une forme de surface plane, formant une aire latérale de cône ou bombée du surface de contact (17), saillissant radialement vers l'extérieur au-delà de l'envelope de tube, du tube de guidage de barre de contrôle (1) sur le tube de carter d'entraînement (2).

8. Tube de guidage de barre de contrôle (1) et tube de carter d'entraînement (2) selon l'une quelconque des revendications 1 à 7, dans lesquels le dit anneau à baïonnette (6) est monté de façon rotative sur le dit tube de carter d'entraînement (2) avec jeu axial à l'état non verrouillé.

9. Tube de guidage de barre de contrôle (1) et tube de carter d'entraînement (2) selon l'une quelconque des revendications 1 à 8, dans lesquels le dit anneau à baïonnette (6) est haubané axialement, à l'état verrouillé, dans son siège sur le tube de carter d'entraînement (2) par la pression active du ressort.

10. Tube de guidage de barre de contrôle (1) et tube de carter d'entraînement (2) selon l'une quelconque des revendications 1 à 9, ayant une protection antirotative du dit anneau à baïonnette (6), qui est pourvue, à l'état verrouillé, de chevilles de fixation (13) passant par le dit anneau à baïonnette (6) et pourvues de têtes de verrouillage (14).
